# FASCICULE DE BREVET EUROPEEN

(11) **EP 3 584 126 B1**
(45) Date de publication et mention de la délivrance du brevet: **12.04.2023**
(21) Numéro de dépôt: 19179308.2
(22) Date de dépôt: 11.06.2019
(51) Int. Cl.: B60S 1/52, B60S 1/56, G02B 27/00, G01S 17/00

(54) **MODULE DE NETTOYAGE D'UN ÉLÉMENT OPTIQUE OU D'UN DISPOSITIF DE PROTECTION D'UN ÉLÉMENT OPTIQUE ET SYSTÈME D'ASSISTANCE À LA CONDUITE ASSOCIÉ**
REINIGUNGSMODUL EINES OPTISCHEN ELEMENTS ODER EINER SCHUTZVORRICHTUNG EINES OPTISCHEN ELEMENTS, UND ENTSPRECHENDES LENKASSISTENZSYSTEM
MODULE FOR CLEANING AN OPTICAL ELEMENT OR A DEVICE FOR PROTECTING AN OPTICAL ELEMENT AND ASSOCIATED DRIVING-ASSISTANCE SYSTEM

(30) Priorité: 19.06.2018 FR 1855402
(43) Date de publication de la demande: 25.12.2019
(73) Titulaire: Valeo Systèmes d'Essuyage, 78322 Le Mesnil Saint Denis (FR)
(72) Inventeur: CAILLOT, Gérald, 78322 LE MESNIL SAINT DENIS (FR); TREBOUET, Marcel, 78322 Le Mesnil Saint Denis (FR); GRASSO, Giuseppe, 63500 ISSOIRE (FR); ROUSSEAU, Jean-François, 63500 ISSOIRE (FR); BRETAGNOL, Frédéric, 63500 ISSOIRE (FR); JARASSON, Jean-Michel, 78322 LE MESNIL SAINT DENIS (FR); GIRAUD, Frédéric, 78322 LE MESNIL SAINT DENIS (FR); HERRADA, Jose-Luis, 78322 LE MESNIL SAINT DENIS (FR); BELHAJ, Medhi, 78322 LE MESNIL SAINT DENIS (FR)
(74) Mandataire: Valeo Visibility

(56) Documents cités:
- EP-A1- 3 006 279
- WO-A1-2017/137277
- US-A1- 2016 103 316
- US-A1- 2016 244 028
- US-A1- 2017 151 933
- US-A1- 2018 015 908
- US-A1- 2018 143 298

## Description

La présente invention se rapporte au domaine de l'aide à la conduite et notamment aux systèmes d'assistance à la conduite implantés sur certains véhicules automobiles.

Un système d'assistance à la conduite peut comporter au moins un élément optique. L'invention concerne plus particulièrement un module de nettoyage d'un dispositif de protection d'un élément optique d'un tel système d'assistance à la conduite. L'invention concerne également un module de nettoyage destiné à nettoyer directement un élément optique. En effet, certains éléments optiques sont dépourvus de dispositif de protection rapporté.

L'élément optique d'un système d'assistance à la conduite est configuré pour émettre et/ou capturer des signaux optiques afin de déterminer des scènes de route ou encore un environnement autour du véhicule automobile. Dans le cas d'éléments capturant des signaux optiques, de tels éléments optiques peuvent par exemple être des caméras comprenant au moins une lentille. Par ailleurs, dans le cas d'éléments émettant et capturant des signaux optiques, de tels éléments optiques peuvent utiliser une technologie Lidar (correspondant à l'acronyme anglais de Light Détection And Ranging, ou détection et estimation de la distance par la lumière en français).

Actuellement, de nombreux éléments optiques équipent un grand nombre de véhicules automobiles afin de faciliter la mise au stationnement de ce dernier, ou encore pour permettre à ce véhicule automobile une certaine autonomie. Dans ce second cas, on peut citer de façon non limitative les détecteurs de franchissement de ligne, les systèmes de freinage automatique d'urgence, les régulateurs adaptatifs de vitesse, les dispositifs de détection d'angle mort, ou encore certains équipements tels pourvus de la technologie Lidar pour les véhicules, pouvant par exemple être des véhicules autonomes.

De tels éléments optiques sont généralement installés à l'extérieur du véhicule automobile, comme par exemple au niveau du toit, des ailes avant ou arrière, des rétroviseurs, ou encore des montants latéraux du pare-brise du véhicule automobile. Ainsi, ces éléments optiques sont fortement exposés aux salissures organiques ou minérales, comme par exemple des poussières ou des insectes, et également aux intempéries qui peuvent laisser des traces d'eau par exemple dans le champ de vision et/ou d'émission de l'élément optique ce qui peut nuire à sa bonne opérabilité et donc à la bonne opérabilité du système d'assistance à la conduite.

On connaît de l'art antérieur de nombreux modules de nettoyage pour des éléments optiques tels que des caméras pour l'aide au stationnement. On connaît par exemple du document US 9783167, un module de nettoyage permettant de projeter un liquide de nettoyage sur un élément optique d'un système d'assistance à la conduite au niveau de son champ de vision. Toutefois, après une opération de nettoyage, des gouttes résiduelles sur la surface nettoyée peuvent perturber le système d'assistance à la conduite.

De plus en plus, les systèmes d'assistance à la conduite présentent une surface de révolution afin de pouvoir capturer des scènes de routes tout autour du véhicule automobile par exemple, et présentent généralement un rayon de courbure assez faible, c'est-à-dire une courbure forte, pour des raisons d'aérodynamisme et d'encombrement. On peut citer en particulier les systèmes d'assistance à la conduite utilisant la technologie Lidar.

Cependant, les modules de nettoyage connus de l'art antérieur ne sont pas adaptés pour le nettoyage de telles surfaces de révolution avec de faibles rayons de courbure.
D'autres modules de nettoyage connus sont décrits dans les documents : US2018/143298, US2018/015908, US2016/103316, WO2017/137277, US2017/151933, US2016/244028 et EP3006279.

La présente invention se propose de pallier, au moins partiellement, les problèmes de l'art antérieur exposés ci-dessus en proposant un module de nettoyage permettant d'assurer un nettoyage efficace d'une surface d'un élément optique ou d'un dispositif de protection d'un élément optique utilisé dans un système d'assistance à la conduite, une telle surface présentant un rayon de courbure faible, ou une courbure forte.

Un autre objectif de la présente invention, différent de l'objectif précédent est de proposer un système d'assistance à la conduite dont le nettoyage est efficace et simple à mettre en oeuvre lorsque le véhicule automobile est en mouvement ou à l'arrêt.

Afin d'atteindre au moins partiellement au moins un des objectifs précités, la présente invention est telle que définie dans la revendication 1 et a pour objet un module de nettoyage d'un élément optique ou d'un dispositif de protection d'un élément optique, notamment destiné à équiper un véhicule automobile. L'élément optique ou le dispositif de protection présentent une surface de révolution ayant une forme cylindrique. Si la surface à nettoyer appartient à un dispositif de protection, la surface de révolution de ce dernier est configurée pour être agencée autour de l'élément optique.

Le module de nettoyage comprend au moins une bague configurée pour entourer la surface de révolution de l'élément optique ou du dispositif de protection et comporte au moins une structure de nettoyage.

Selon l'invention, la bague est configurée pour être mobile selon un mouvement relatif de translation selon un axe de révolution de la bague par rapport à l'élément optique ou au dispositif de protection de manière à entraîner en déplacement la structure de nettoyage le long de la surface de révolution.

Un tel module de nettoyage permet d'assurer un nettoyage efficace d'un élément optique ou d'un dispositif de protection entourant un élément optique, présentant un rayon de courbure faible. En effet, l'utilisation d'une bague destinée à entourer la surface de révolution permet de s'affranchir des contraintes liées au rayon de courbure. De plus, la présence d'une structure de nettoyage permet d'éliminer des poussières ou des gouttes d'eau qui pourraient être déposées sur la surface de révolution à nettoyer afin de garantir une bonne opérabilité de l'élément optique.

Selon l'invention, la structure de nettoyage comprend au moins une buse de projection de fluide configurée pour projeter un fluide de nettoyage sur la surface de révolution.

Le module de nettoyage selon la présente invention peut comprendre en outre une ou plusieurs des caractéristiques suivantes prises seules ou en combinaison.

La bague présente au moins une partie en forme d'arc de cercle.

Selon un mode de réalisation particulier, la bague présente une forme annulaire.

La bague présente une surface interne configurée pour être disposée en regard de la surface de révolution à nettoyer.

Le fluide de nettoyage peut être choisi parmi : de l'air comprimé, ou un liquide de nettoyage.

Le fluide de nettoyage peut également être de l'air comprimé et du liquide de nettoyage. L'air comprimé et le liquide de nettoyage peuvent être projetés simultanément. La projection simultanée peut notamment se faire par des buses différentes, l'une projetant de l'air, l'autre projetant du liquide. Alternativement, la projection d'air comprimé peut intervenir au cours d'une première étape, suivie d'une deuxième étape de projection de liquide de nettoyage, ou la projection de liquide de nettoyage peut intervenir au cours d'une première étape, suivie d'une deuxième étape de projection d'air comprimé.

L'au moins une buse de projection de fluide peut être distincte de la bague.

De manière alternative, la bague comporte ladite au moins une buse de projection de fluide.

Selon l'invention, la structure de nettoyage comporte une structure d'essuyage. Une telle structure présente l'avantage de permettre un nettoyage mécanique de la surface de révolution.

Selon un mode de réalisation particulier, la structure d'essuyage comporte un joint torique.

Selon un mode de réalisation particulier, la bague peut être sensiblement transparente aux longueurs d'ondes d'émissions et/ou de réception de l'élément optique.

Selon une variante, l'au moins une buse de projection de fluide peut être rapportée à la bague, cette dernière comportant également la structure d'essuyage.

Selon cette variante, l'au moins une buse de projection de fluide et la structure d'essuyage peuvent être disposées de manière adjacente l'une de l'autre sur la surface interne de la bague.

Selon cette variante, l'au moins une buse de projection de fluide et la structure d'essuyage peuvent aussi être disposées en étant en contact ou écartée l'une de l'autre sur la surface interne de la bague.

Selon un aspect, la présente invention se rapporte à un module de nettoyage d'un élément optique ou d'un dispositif de protection d'un élément optique, l'élément optique comprenant au moins un capteur et/ou au moins un émetteur et capteur de signaux optiques, destiné à équiper un véhicule automobile. L'élément optique ou le dispositif de protection présentent une surface de révolution. Dans le cas où la surface de révolution appartient au dispositif de protection, cette surface est configurée pour être agencée autour dudit au moins un capteur et/ou au moins un émetteur et capteur de signaux optiques. Le module de nettoyage comprend au moins une bague de forme générale annulaire présentant un axe de révolution, configurée pour entourer la surface de révolution et au moins une structure de nettoyage, de préférence une structure d'essuyage.

La présente invention a également pour objet un système d'assistance à la conduite, notamment pour véhicule automobile. Le système d'assistance à la conduite comprend au moins un élément optique et en outre :
- au moins une surface de révolution autour d'un premier axe de révolution, ladite surface de révolution appartenant à un dispositif de protection et étant configurée pour être agencée autour dudit au moins un élément optique, ou ladite surface de révolution appartenant à l'élément optique,
- un module de nettoyage associé tel que décrit précédemment, comportant une bague, et
- au moins un actionneur configuré pour générer un mouvement relatif de translation la surface de révolution et la bague du module de nettoyage selon un deuxième axe de révolution de la bague.

Le système d'assistance à la conduite peut comprendre en outre une ou plusieurs des caractéristiques suivantes prises seules ou en combinaison.

Selon un mode de réalisation particulier, la surface de révolution et la bague du module de nettoyage sont de formes générales complémentaires.

Selon un aspect, la surface de révolution peut présenter une forme cylindrique et la bague du module de nettoyage peut présenter une forme annulaire.

Selon cet aspect, le premier axe de révolution du dispositif de protection ou de l'élément optique et le deuxième axe de révolution de la bague du module de nettoyage sont confondus.

L'élément optique peut être choisi parmi un capteur optique, ou un capteur optique couplé à un émetteur optique.

Selon un mode de réalisation particulier, le système d'assistance à la conduite comporte une technologie Lidar, correspondant à l'émission d'un faisceau laser et à la détection de l'écho reçu afin de déterminer la distance séparant le véhicule automobile d'un autre objet.

Selon un premier aspect, le dispositif de protection ou l'élément optique sont configurés pour être monté fixe sur le véhicule automobile et la bague est configurée pour être montée mobile par rapport au dispositif de protection ou à l'élément optique.

Selon ce premier aspect, l'au moins un actionneur est configuré pour entraîner la bague en mouvement entre :
- une position rétractée dans laquelle la bague est disposée affleurante à l'élément de carrosserie ou est logée à l'intérieur de l'élément de carrosserie, et
- une position déployée, dans laquelle la bague est en saillie par rapport à l'élément de carrosserie.

Selon un deuxième aspect, la bague est configurée pour être montée fixe sur le véhicule automobile et le dispositif de protection est configuré pour être monté mobile par rapport à la bague.

Selon ce deuxième aspect, l'au moins un actionneur est configuré pour entraîner le dispositif de protection en mouvement entre :
- une position active, dans laquelle le dispositif de protection est disposé au moins en partie à l'extérieur de l'élément de carrosserie, et
- une position passive dans laquelle le dispositif de protection est logé au moins en partie à l'intérieur de l'élément de carrosserie et/ou au moins en partie en vis-à-vis de la bague.

Selon un autre aspect, le système d'assistance à la conduite comprend au moins deux dispositifs de protection distincts et au moins deux modules de nettoyage respectivement associés à un des dispositifs de protection.

Les dispositifs de protection peuvent être reliés entre eux par un capot.

L'au moins un actionneur est par exemple disposé de manière à pouvoir déplacer le capot afin de piloter de façon synchronisée le déplacement des dispositifs de protection en translation.

Selon cette variante, l'au moins un actionneur peut être disposé sensiblement au centre du capot.

Selon cette variante, l'au moins un actionneur peut être configuré pour entraîner de manière simultanée les au moins deux dispositifs de protection en mouvement entre leur position active et leur position passive.

L'au moins actionneur peut être choisi parmi les actionneurs : pneumatiques, électriques, ou encore magnétiques.

Selon un aspect, la structure de nettoyage est configurée pour être disposée dans le champ de vision de l'au moins un élément optique lors du balayage de la surface de révolution du dispositif de protection.

Le système d'assistance à la conduite peut comporter en outre une unité électronique de contrôle configurée pour déclencher un procédé de nettoyage de l'élément optique ou du dispositif de protection de l'élément optique, ledit procédé de nettoyage comprenant :
- au moins une première étape de nettoyage lors d'un mouvement relatif entre la bague et la surface de révolution selon le deuxième axe de révolution de la bague dans un premier sens, et
- une deuxième étape de nettoyage lors d'un mouvement relatif entre la bague et la surface de révolution selon le deuxième axe de révolution de la bague dans un deuxième sens opposé au premier sens.

Selon un aspect, le procédé de nettoyage du dispositif de protection peut être déclenché lorsque le véhicule est à l'arrêt par déplacement relatif du dispositif de protection de sa position active vers sa position passive lors de la première étape de nettoyage de manière à ce que le dispositif de protection rentre au moins en partie dans l'élément de carrosserie puis de sa position passive vers sa position active lors de la deuxième étape de nettoyage de manière à ce que le dispositif de protection retourne dans sa position active.

Selon un autre aspect, le procédé de nettoyage du dispositif de protection ou de l'élément optique peut être déclenché lorsque le véhicule est en mouvement par déplacement relatif de la bague de sa position rétractée vers sa position déployée au cours de la première étape de nettoyage de manière à nettoyer une première fois le dispositif de protection ou l'élément optique puis de sa position déployée vers sa position rétractée au cours de la deuxième étape de nettoyage de manière à nettoyer une deuxième fois le dispositif de protection ou l'élément optique.

L'unité électronique de contrôle peut être configurée pour piloter l'au moins une buse de projection de fluide afin de mettre en oeuvre une étape de projection de fluide de nettoyage sur l'élément optique ou le dispositif de protection lorsque des salissures sont détectées par l'élément optique.

Selon un aspect, l'étape de projection de fluide de nettoyage est réalisée au moins simultanément à la première étape de balayage.

D'autres caractéristiques et avantages de la présente invention apparaîtront plus clairement à la lecture de la description suivante, donnée à titre illustratif et non limitatif, et des dessins annexés dans lesquels :
- la figure 1 est une représentation schématique en perspective et partielle d'un système d'assistance à la conduite,
- la figure 2 est une représentation schématique en perspective d'un système d'assistance à la conduite selon un mode de réalisation particulier au cours d'un procédé de nettoyage,
- la figure 3 est une représentation schématique en perspective d'un module de nettoyage d'un système d'assistance à la conduite selon un mode de réalisation particulier,
- la figure 4 est une représentation schématique en perspective d'un système d'assistance à la conduite selon une variante des modes de réalisation des figures 1 et 2, et
- la figure 5 est une représentation schématique d'un diagramme présentant les différentes étapes d'un procédé de nettoyage d'un dispositif de protection d'un élément optique du système d'assistance à la conduite des figures 1, 2 et 4.

Les éléments identiques sur les différentes figures portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent uniquement à un seul mode de réalisation. De simples caractéristiques de différents modes de réalisation peuvent également être combinées et/ou interchangées pour fournir d'autres réalisations.

Dans la description suivante, il est fait référence à une première et à une deuxième extrémités du dispositif de protection, à un premier et à un deuxième axes de révolution, et à une première et à une deuxième étapes de balayage/nettoyage. Il s'agit d'un simple indexage pour différencier et dénommer des éléments proches mais non identiques. Cette indexation n'implique pas non plus un ordre dans le temps pour apprécier la disposition des différents éléments composant le système d'assistance à la conduite, ou encore pour apprécier le déroulement d'un procédé de nettoyage de ce système d'assistance à la conduite.

### Système d'assistance à la conduite

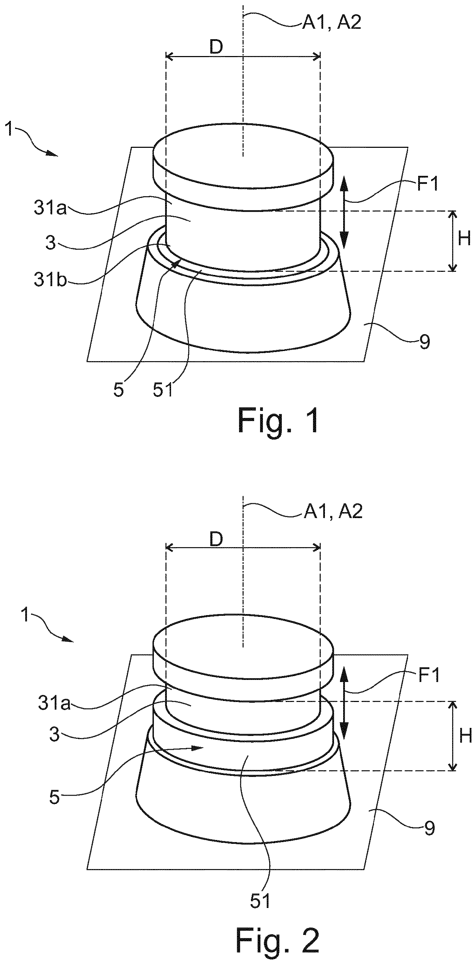

En référence aux figures 1 et 2, il est représenté de façon partielle un système d'assistance à la conduite 1 notamment pour véhicule automobile. Le système d'assistance à la conduite 1 comprend :
- au moins un élément optique,
- au moins un dispositif de protection 3,
- pour chaque dispositif de protection 3, un module de nettoyage 5 associé, et
- au moins un actionneur (non représenté).

L'élément optique peut être choisi parmi un capteur optique, tel qu'une caméra configurée pour capturer et transmettre des scènes de route par exemple, ou un capteur optique couplé à un émetteur optique comme une technologie Lidar par exemple, correspondant à l'émission d'un faisceau laser et à la détection de l'écho reçu afin de déterminer la distance séparant le véhicule automobile d'un autre objet, ou encore une combinaison de ces éléments. L'élément optique est destiné à être logé dans un dispositif de protection 3 correspondant.

De plus, le système d'assistance à la conduite 1 peut comporter plusieurs éléments optiques qui peuvent être logés dans un dispositif de protection 3 commun. Les éléments optiques peuvent être agencés de sorte que leurs champs de vision respectifs soient orientés selon différentes directions afin de capturer différentes scènes de route tout autour du véhicule automobile.

Ainsi, les éléments optiques peuvent présenter différents angles de vision selon le nombre et le type de composants de l'élément optique, de préférence l'angle de vision de l'élément ou de chaque élément optique est compris de préférence entre 60° et 360°. Avec de tels éléments optiques, le système d'assistance à la conduite 1 peut équiper des véhicules autonomes par exemple.

Le dispositif de protection 3 présente une surface de révolution autour d'un premier axe de révolution A1. Cette surface de révolution est configurée pour être agencée autour de l'élément optique afin de protéger ce dernier de dégradations qu'il pourrait être amené à subir, notamment du fait de projections d'éléments solides d'origine minérale ou organique tels que des gravillons ou encore des insectes.

Le dispositif de protection 3 présente par exemple une forme générale cylindrique. Selon ce mode de réalisation particulier, le dispositif de protection 3 présente une hauteur H qui peut par exemple être comprise entre 50 mm et 350 mm, notamment entre 250 mm et 300 mm. D'autre part, le dispositif de protection 3 présente un diamètre D par exemple compris entre 60 mm et 210 mm. Toutefois pour protéger des éléments optiques de taille importante et/ou présents en nombre important et protégés par un seul dispositif de protection 3, le dispositif de protection 3 pourra également avoir un diamètre allant jusqu'à 800 mm. Selon d'autres variantes non représentées ici, le dispositif de protection 3 peut présenter d'autres formes géométriques.

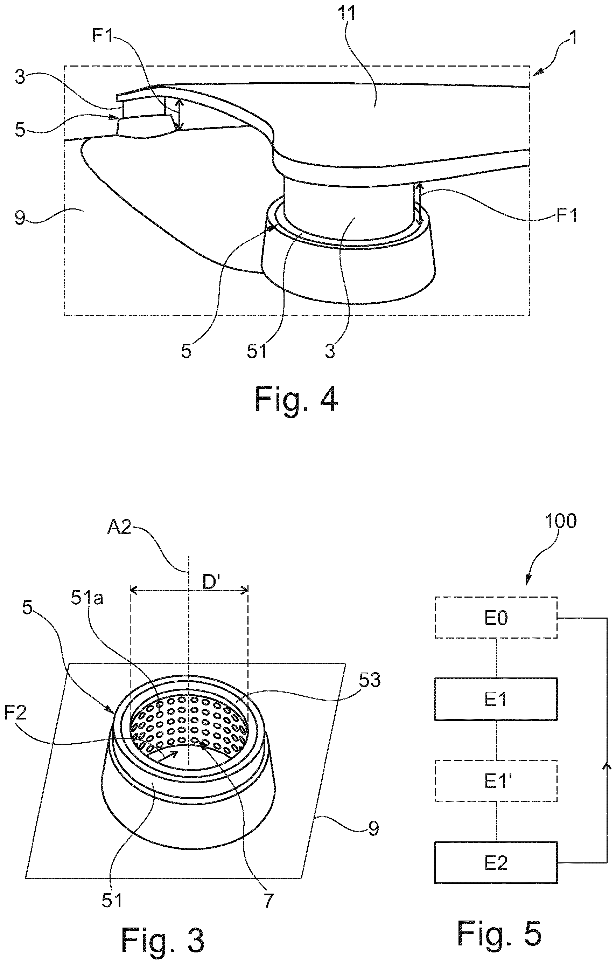

Un exemple de réalisation du module de nettoyage 5 est représenté plus en détail sur la figure 3. Le module de nettoyage 5 comprend au moins une bague 51 présentant un deuxième axe de révolution A2. La bague 51 est configurée pour entourer le dispositif de protection 3 comme cela est représenté en référence aux figures 1 et 2. Le module de nettoyage 5 peut ainsi s'adapter à toute forme de surface de révolution du dispositif de protection 3.

Selon ces modes de réalisation particuliers, le dispositif de protection 3 et la bague 51 sont de formes générales complémentaires. La bague 51 présente une surface interne 51a destinée à être disposée en regard du dispositif de protection 3. Par ailleurs, le premier axe de révolution A1 du dispositif de protection 3 et le deuxième axe de révolution A2 de la bague 51 sont par exemple confondus.

Le module de nettoyage 5 comporte une structure de nettoyage. De préférence, cette structure de nettoyage est une structure d'essuyage 53. La structure d'essuyage 53 est prévue sur la surface interne 51a de la bague 51.

La structure d'essuyage 53 est configurée pour être disposée au contact du dispositif de protection 3 au moins au cours d'une partie d'un procédé de nettoyage 100 (figure 5) de ce dernier de manière à balayer la surface de révolution du dispositif de protection 3. Un tel procédé de nettoyage 100 est décrit plus en détail par la suite. Le balayage de la surface de révolution du dispositif de protection 3 par la structure d'essuyage 53 permet d'enlever d'éventuelles salissures présentes sur cette surface de révolution. Le balayage peut être réalisé lors d'un mouvement relatif entre la bague 51 et le dispositif de protection 3, plus particulièrement un mouvement relatif de translation selon le deuxième axe de révolution A2 de la bague 51, comme expliqué par la suite. Ainsi, un nettoyage efficace du dispositif de protection 3 peut être réalisé quelle que soit la forme de sa surface de révolution de manière à ce que le système d'assistance à la conduite 1 conserve une bonne opérabilité.

Selon les modes de réalisation particuliers des figures 1 à 3, la bague 51 présente au moins une partie en forme d'arc de cercle, et plus particulièrement une forme annulaire, afin de pouvoir s'adapter à la forme cylindrique du dispositif de protection 3. Plus particulièrement, la bague 51 présente un diamètre D'. Afin de permettre un nettoyage efficace du dispositif de protection 3 tout en limitant les contraintes lors du mouvement relatif entre la bague 51 et le dispositif de protection 3, le diamètre D' de la bague 51 est sensiblement supérieur au diamètre D du dispositif de protection 3. Plus particulièrement le diamètre D' de la bague 51 est suffisant pour assurer le contact entre la structure d'essuyage 53 et la surface de révolution du dispositif de protection 3. Ainsi, le nettoyage efficace du dispositif de protection 3 est possible quel que soit son rayon de courbure, et plus particulièrement si ce rayon de courbure est faible.

La structure d'essuyage 53 présente une forme générale complémentaire à la forme de la surface de révolution du dispositif de protection 3 que cette structure d'essuyage 53 est amenée à balayer lors du procédé de nettoyage 100 décrit par la suite. Selon le mode de réalisation particulier de la figure 3, la structure d'essuyage 53 comporte un joint torique. Selon d'autres variantes non représentées ici, la structure d'essuyage 53 peut être réalisée en d'autres matériaux ou présenter une forme différente.

La structure d'essuyage 53 est destinée à être disposée dans le champ de vision de l'au moins un élément optique lors du balayage de la surface de révolution du dispositif de protection 3. La structure d'essuyage 53 assure donc le nettoyage de la surface externe du dispositif de protection 3 de préférence sur l'ensemble du champ de vision de l'élément optique afin de permettre la bonne opérabilité du système d'assistance à la conduite 1. Ainsi, la structure d'essuyage 53 peut s'étendre sur une partie de la surface interne 51a de la bague 51. Selon le mode de réalisation particulier de la figure 3, la structure d'essuyage 53 s'étend sur l'ensemble du pourtour de la surface interne 51a de la bague 51 afin de pouvoir réaliser un nettoyage sur l'ensemble du pourtour du dispositif de protection 3 que l'élément optique présente un angle de vision de 360° ou non.

Selon le mode de réalisation particulier de la figure 1, le module de nettoyage 5, et plus particulièrement la bague 51, est configuré pour être disposé de manière affleurante à l'élément de carrosserie 9 du véhicule automobile dont le dispositif de protection 3 fait saillie.

Le module de nettoyage 5 peut comprendre une structure de nettoyage comportant au moins une buse de projection de fluide 7 configurée pour projeter un fluide de nettoyage sur la surface de révolution du dispositif de protection 3.

De préférence, la structure de nettoyage comprend une structure d'essuyage 53 et au moins une buse de projection de fluide 7, comme représenté à la figure 3.

En effet, il est possible que dans le cas de salissures tenaces ou incrustées sur cette surface de révolution, la seule action mécanique liée au balayage de la surface de révolution du dispositif de protection par la structure d'essuyage 53 ne soit pas suffisante. Ainsi, il peut être possible de recourir à l'utilisation d'un fluide de nettoyage tel que de l'air comprimé ou encore un liquide de nettoyage afin de participer au détachement de ces salissures tenaces ou incrustées de la surface externe du dispositif de protection 3. Plus particulièrement, l'utilisation d'air comprimé permet de décoller de telles salissures grâce à l'intensité du flux d'air soufflé sur la surface de révolution du dispositif de protection 3 et l'utilisation de liquide de nettoyage permet d'humidifier ces salissures afin de faciliter leur détachement de cette surface de révolution lors du balayage de cette dernière par la structure d'essuyage 53.

La projection d'air comprimé et la projection de liquide de nettoyage peuvent être simultanées, ou la projection d'air comprimé peut intervenir au cours d'une première étape, suivie d'une deuxième étape de projection de liquide de nettoyage, ou la projection de liquide de nettoyage peut intervenir au cours d'une première étape, suivie d'une deuxième étape de projection d'air comprimé.

Selon le mode de réalisation particulier de la figure 3, l'au moins une buse de projection de fluide 7 est incorporée à la bague 51. L'au moins une buse de projection de fluide 7 est disposée de manière à projeter du fluide de nettoyage en direction du deuxième axe de révolution A2 de la bague 51, comme cela est représenté par la flèche F2.

Selon ce mode de réalisation particulier, la bague 51 comprend l'au moins une buse de projection de fluide 7. Toutefois, selon une variante non représentée ici, l'au moins une buse de projection de fluide 7 peut être rapportée à la bague 51, c'est-à-dire qu'il peut s'agir d'une structure supplémentaire installée à l'intérieur de la bague 51.

De plus, l'au moins une buse de projection de fluide 7 et la structure d'essuyage 53 sont disposées de manière adjacente, c'est-à-dire dans le prolongement, l'une de l'autre sur la surface interne 51a de la bague 51 selon ce mode de réalisation particulier, en étant directement en contact ou non.

Selon une alternative non représentée ici, l'au moins une buse de projection de fluide 7 peut être distincte de la bague 51. Plus particulièrement, l'au moins une buse de projection de fluide 7 peut être disposée à l'extérieur du véhicule automobile et orientée de manière à pouvoir projeter du fluide de nettoyage sur la surface de révolution du dispositif de protection 3 au cours du procédé de nettoyage 100.

Par ailleurs, l'au moins un actionneur est configuré pour générer le mouvement relatif de translation entre la bague 51 du module de nettoyage 5 et le dispositif de protection 3. Ce mouvement relatif de translation est réalisé selon une direction parallèle au deuxième axe de révolution A2 de la bague 51. Ce mouvement relatif de translation permet la mise en oeuvre du procédé de nettoyage 100 (décrit en référence à la figure 5) du dispositif de protection 3. Plus particulièrement, le mouvement relatif de translation entre la bague 51 et le dispositif de protection 3 se fait selon la flèche F1 représentée en référence aux figures 1 et 2. Au cours de ce mouvement relatif, la structure d'essuyage 53 balaye donc la surface de révolution du dispositif de protection 3 en se déplaçant également parallèlement au premier axe de révolution A1 du dispositif de protection 3. La mise en oeuvre d'un tel mouvement de translation permet de s'affranchir du rayon de courbure de la surface de révolution du dispositif de protection 3 et permet donc de garantir un nettoyage efficace du dispositif de protection 3.

L'actionneur peut être choisi parmi les actionneurs pneumatiques, les actionneurs électriques, ou encore les actionneurs magnétiques. De tels actionneurs sont peu coûteux, peu encombrants et peuvent être facilement intégrés au véhicule automobile.

### Premier mode de réalisation:

Selon un premier mode de réalisation, le dispositif de protection 3 est mobile en translation selon la flèche F1 alors que la bague 51 du module de nettoyage 5 est fixe. Plus particulièrement selon le mode de réalisation de la figure 1, la bague 51 est par exemple disposée affleurante à l'élément de carrosserie 9.

Selon ce premier mode de réalisation particulier, le dispositif de protection 3 est apte à être déplacé entre une position active (figure 1) et une position passive (non représentée), notamment sous l'effet de l'actionneur lorsque le procédé de nettoyage 100 est mis en oeuvre.

Dans la position active, le dispositif de protection 3 est disposé au moins en partie à l'extérieur de l'élément de carrosserie 9, comme cela est représenté en référence à la figure 1. L'élément optique disposé à l'intérieur du dispositif de protection 3 peut capturer des scènes de route ou de l'environnement autour du véhicule automobile lorsque le dispositif de protection 3 est en position active. Plus particulièrement, le dispositif de protection 3 peut faire saillie de l'élément de carrosserie 9 du véhicule automobile. Le dispositif de protection 3 présente donc une première extrémité 31a et une deuxième extrémité 31b, opposée à la première extrémité 31a. Cette deuxième extrémité 31b est disposée au plus près de l'élément de carrosserie 9. La première extrémité 31a est en saillie par rapport à l'élément de carrosserie 9, et s'étend à distance de la deuxième extrémité 31b.

Lorsque le dispositif de protection 3 est en position passive, celui-ci est logé au moins en partie à l'intérieur de l'élément de carrosserie 9 et/ou au moins en partie en vis-à-vis de la bague 51. Lorsque le dispositif de protection 3 est en position passive, la capture de scènes des scènes de route environnant le véhicule automobile n'est plus possible par l'élément optique logé à l'intérieur du dispositif de protection 3.

Ce premier mode de réalisation est donc particulièrement adapté pour mettre en oeuvre le procédé de nettoyage 100 lorsque le véhicule automobile est à l'arrêt, par exemple à un feu de signalisation ou stationné.

### Deuxième mode de réalisation:

Selon un deuxième mode de réalisation, représenté en référence à la figure 2, le dispositif de protection 3 est destiné à être monté fixe et au moins un élément du module de nettoyage 5 est monté mobile en translation selon la flèche F1. Par exemple, la bague 51 est montée mobile en translation selon la flèche F1.

Le dispositif de protection 3 peut être fixe en étant disposé au moins en partie à l'extérieur d'un élément de carrosserie 9 du véhicule automobile de manière à ce que l'élément optique disposé à l'intérieur de ce dernier puisse capturer des scènes de route ou de l'environnement autour du véhicule automobile. Plus particulièrement, le dispositif de protection 3 peut faire saillie de l'élément de carrosserie 9 du véhicule automobile. Le dispositif de protection 3 présente donc une première extrémité 31a et une deuxième extrémité 31b, opposée à la première extrémité 31a. Cette deuxième extrémité 31b est disposée plus près de l'élément de carrosserie 9. La première extrémité 31a est disposée en saillie par rapport à l'élément de carrosserie 9, et s'étend à distance de la deuxième extrémité 31b.

Selon ce deuxième mode de réalisation, la bague 51 est apte à être déplacée entre une position rétractée et une position déployée, notamment sous l'effet de l'actionneur lorsque le procédé de nettoyage 100 est mis en oeuvre. Lorsque la bague 51 est en position rétractée, elle est par exemple disposée affleurante à l'élément de carrosserie 9 ou elle peut être logée à l'intérieur de l'élément de carrosserie 9. Lorsque la bague 51 est dans sa position déployée, elle est disposée en saillie de l'élément de carrosserie 9. Plus particulièrement, la fin de course de sa position déployée est délimitée par la première extrémité 31a du dispositif de protection 3 pouvant former une butée par exemple.

Ainsi, lorsque la bague 51 se déplace entre la position rétractée et la position déployée, elle balaie l'ensemble de la surface extérieure du dispositif de protection 3.

Selon ce deuxième mode de réalisation, la bague 51 et la structure d'essuyage 53 peuvent être sensiblement transparentes aux longueurs d'ondes d'émissions et/ou de réception de l'élément optique, ce qui correspond à un élément optique de la technologie Lidar. Ceci est particulièrement avantageux, lorsque la structure d'essuyage 53 balaye la surface de révolution du dispositif de protection 3, l'élément optique restant fonctionnel. Ainsi, il est possible de mettre en oeuvre le procédé de nettoyage 100 lorsque le véhicule automobile est en déplacement ou à l'arrêt sans nuire à la bonne opérabilité du système d'assistance à la conduite 1. En effet, le déplacement de la bague 51 sur la hauteur H du dispositif de protection 3 lors de l'opération de nettoyage 100 ne nuit pas à la réception ou à l'émission des signaux optiques de l'élément optique composant le système d'assistance à la conduite 1.

### Variante du premier ou du deuxième mode de réalisation :

Selon la variante représentée en référence à la figure 4, le système d'assistance à la conduite peut comporter en outre au moins deux dispositifs de protection 3 tels que décrits en référence aux figures 1 et 2. Les dispositifs de protection 3 sont distincts et agencés à distance l'un de l'autre et visent à protéger chacun un élément optique ou un ensemble d'éléments optiques. Ces dispositifs de protection 3 peuvent être reliés entre eux par un capot 11. Selon cette variante, le système d'assistance à la conduite 1 comprend également un module de nettoyage 5 associé à chaque dispositif de protection 3.

Comme indiqué précédemment, chaque module de nettoyage 5 peut comprendre une structure de nettoyage ayant une structure d'essuyage 53 et/ou au moins une buse de projection de fluide 7. Ces modules de nettoyage 5 présentent de préférence la même structure que le module de nettoyage 5 représenté et décrit en référence à la figure 3

Selon la variante du premier mode de réalisation, les bagues 51 sont fixes, les dispositifs de protection 3 sont mobiles en translation, et l'actionneur peut être disposé de manière à déplacer le capot 11 afin de piloter de façon synchronisée, voire simultanée, le déplacement des dispositifs de protection 3. Les dispositifs de protection 3 peuvent être déplacés en translation selon un axe parallèle au deuxième axe de révolution A2 de chaque bague 51, c'est-à-dire selon la flèche F1, entre une position active et une position passive. La position active des dispositifs de protection 3 correspond, comme précédemment, à une disposition de ceux-ci au moins en partie à l'extérieur de l'élément de carrosserie 9, et la position passive correspond à une disposition de ceux-ci au moins en partie à l'intérieur de l'élément de carrosserie 9 et/ou au moins en partie en vis-à-vis de la bague 51.

L'actionneur peut notamment être disposé sensiblement au centre du capot 11 de manière à permettre un déplacement simultané des dispositifs de protection 3 entre leur position active et leur position passive.

Le procédé de nettoyage 100 du dispositif de protection 3 peut être réalisé lorsque le véhicule automobile est à l'arrêt.

Selon la variante du deuxième mode de réalisation les dispositifs de protection 3 et le capot 11 peuvent être fixes, les bagues 51 mobiles, et l'actionneur peut être configuré pour déplacer les bagues 51 des modules de nettoyage 5 par rapport aux dispositifs de protection 3 selon le deuxième axe de révolution A2 de la bague 51 de manière à réaliser le procédé de nettoyage 100 tel que décrit par la suite.

Le système d'assistance à la conduite 1 (représenté en référence aux figures 1, 2 et 4) peut comporter en outre une unité électronique de contrôle (non représentée ici). L'unité électronique de contrôle est configurée pour déclencher le procédé de nettoyage 100 du ou de chaque dispositif de protection 3. L'unité électronique de contrôle peut être reliée à l'au moins un élément optique, celui-ci pouvant être configuré pour permettre la détection de salissures sur l'au moins un dispositif de protection 3.

### Procédé de nettoyage :

En référence à la figure 5, il est représenté de façon schématique un diagramme présentant les différentes étapes mises en oeuvre lors d'un procédé de nettoyage 100 d'un dispositif de protection 3 tel que décrit précédemment en référence aux figures 1, 2 et 4.

Le procédé de nettoyage 100 comprend au moins deux étapes de balayage E1, E2 réalisées par un mouvement relatif entre le dispositif de protection 3 et la bague 51 (figures 1, 2 et 4) d'un module de nettoyage 5 associé. Le mouvement relatif est réalisé selon une direction parallèle au deuxième axe de révolution A2 de la bague 51. Lors d'une première étape de balayage E1, le mouvement peut s'effectuer dans un premier sens. Lors d'une deuxième étape de balayage E2, le mouvement peut s'effectuer dans un deuxième sens, opposé au premier sens.

Par exemple, la première étape de balayage E1 correspond au passage du dispositif de protection 3 de sa position active à sa position passive, ou au passage de la bague 51 de sa position rétractée à sa position déployée. À l'inverse, la deuxième étape de balayage E2 correspond au passage du dispositif de protection 3 de sa position passive à sa position active, ou au passage de la bague 51 de sa position déployée à sa position rétractée. Ainsi, au cours du procédé de nettoyage 100, la surface de révolution du dispositif de protection 3 est balayée au moins deux fois par la structure d'essuyage 53 (figure 3). Un tel balayage par un mouvement aller-retour assure le nettoyage du dispositif de protection 3 sans forcément requérir l'utilisation d'un fluide de nettoyage, ce qui permet entre autre de limiter les coûts de fonctionnement de l'au moins un module de nettoyage 5.

Le procédé de nettoyage 100 peut comprendre, de manière optionnelle une étape de détection E0 de la présence de salissures sur la surface de révolution du dispositif de protection 3. Cette étape de détection E0 peut être réalisée préalablement à la première étape de balayage E1. L'étape de détection E0 peut être mise en oeuvre par un élément optique. Les images capturées par l'élément optique peuvent être traitées par exemple par l'unité électronique de contrôle qui peut déclencher ou non le procédé de nettoyage 100 en fonction du résultat du traitement des images capturées par l'unité électronique de contrôle.

En variante ou en complément, une étape de détection E0 peut être réalisée après les première E1 et deuxième E2 étapes de balayage. Cette étape de détection E0 permet de détecter la présence de salissures éventuelles sur la surface de révolution du dispositif de protection 3 après la deuxième étape de balayage E2. Dans le cas où des salissures sont encore détectées, l'unité électronique de contrôle peut commander une réitération du procédé de nettoyage 100. Cette réitération peut éventuellement comprendre une étape supplémentaire de projection de fluide de nettoyage E1' sur la surface externe du dispositif de protection 3. A cet effet, l'unité électronique de contrôle est configurée pour piloter l'au moins une buse de projection de fluide 7 afin de mettre en oeuvre cette étape de projection de fluide de nettoyage E1'. Cette étape de projection de fluide de nettoyage E1' peut, par exemple, être réalisée en même temps que la première étape de balayage E1.

Ainsi, dans le cas où des salissures sont encore détectées sur la surface de révolution du dispositif de protection 3 lors de l'étape de détection E0 à l'issue d'une première itération du procédé de nettoyage 100, l'unité électronique de contrôle peut déclencher une réitération de ce procédé de nettoyage 100 mettant éventuellement en oeuvre l'étape de projection de fluide de nettoyage E1' entre les première E1 et deuxième E2 étapes de balayage afin de faciliter l'élimination des salissures restantes sur la surface de révolution du dispositif de protection 3.

Le procédé de nettoyage 100 décrit ici peut notamment être réalisé lorsque le système d'assistance à la conduite 1 comprend l'au moins un module de nettoyage 5 décrit en référence aux figures 1 à 3. De manière alternative, lorsque la buse de projection de fluide 7 est distincte de la bague 51, la première étape de balayage E1 et l'étape de projection de fluide de nettoyage E1' peuvent être inversées.

Par ailleurs, le procédé de nettoyage 100 peut être répété plusieurs fois au cours d'un cycle de nettoyage, et notamment lorsque les première E1 et deuxième E2 étapes de balayage ne permettent pas d'obtenir un état de propreté satisfaisant du dispositif de protection 3.

Ainsi, un tel procédé de nettoyage 100 ne nécessite pas l'intervention d'un usager du véhicule automobile afin que le système d'assistance à la conduite 1 conserve une bonne opérabilité. Ce système d'assistance à la conduite 1 peut donc équiper des véhicules autonomes par exemple.

De manière alternative, lorsque la structure de nettoyage du module de nettoyage comporte uniquement une ou des buse(s) de projection de fluide 7 par exemple portée(s) par la bague 51, les étapes E1 et E2 décrites ci-dessus peuvent être des étapes de nettoyage pendant lesquelles l'au moins une buse de projection de fluide 7 projette du fluide la surface externe du dispositif de protection 3.

Ainsi, le nettoyage efficace d'un système d'assistance à la conduite 1 comprenant un dispositif de protection 3 d'un élément optique présentant un rayon de courbure faible est possible grâce au module de nettoyage 5 décrit ci-dessus. Plus particulièrement, le balayage de la surface de révolution du dispositif de protection 3 assuré par la structure d'essuyage 53 sur la bague 51 du module de nettoyage 5 entourant la surface de révolution, au cours du déplacement relatif du dispositif de protection 3 par rapport à la bague 51, permet d'assurer un nettoyage efficace de cette surface de révolution sans avoir à tenir compte du rayon de courbure de cette surface de révolution.

Certains éléments optiques de systèmes d'assistance à la conduite ne possèdent pas de dispositif de protection, dans ce cas la surface à nettoyer est directement celle de l'élément optique qui a également une surface de révolution.

## Revendications

1. Module de nettoyage (5) d'un élément optique ou d'un dispositif de protection (3) d'un élément optique, notamment destiné à équiper un véhicule automobile, ledit élément optique ou ledit dispositif de protection (3) présentant une surface de révolution :
- le module de nettoyage (5) comprenant au moins une bague (51), présentant de préférence au moins une partie en forme d'arc de cercle, configurée pour entourer la surface de révolution de l'élément optique ou du dispositif de protection (3) et au moins une structure de nettoyage (53),
- la surface de révolution présentant une forme cylindrique et la bague (51) étant configurée pour être mobile selon un mouvement relatif de translation selon un axe de révolution (A2) de la bague (51) par rapport à l'élément optique ou au dispositif de protection (3) de manière à entraîner en déplacement la structure de nettoyage le long de la surface de révolution, la structure de nettoyage comprenant au moins une buse de projection de fluide (7) configurée pour projeter un fluide de nettoyage sur la surface de révolution, **caractérisé en ce que** la structure de nettoyage comporte une structure d'essuyage (53), la structure d'essuyage (53) comportant de préférence un joint torique.

2. Module de nettoyage (5) selon la revendication 1, **caractérisé en ce que** la bague (51) comporte ladite au moins une buse de projection de fluide (7).

3. Système d'assistance à la conduite (1) notamment pour véhicule automobile, comprenant au moins un élément optique, **caractérisé en ce qu'**il comprend en outre :
• au moins une surface de révolution autour d'un premier axe de révolution (A1), ladite surface de révolution appartenant à un dispositif de protection (3) et étant configurée pour être agencée autour dudit au moins un élément optique, ou ladite surface de révolution appartenant à l'élément optique,
• un module de nettoyage (5) associé conforme à l'une des revendications 1 ou 2, comportant une bague (51), et
• au moins un actionneur configuré pour générer un mouvement relatif de translation entre la surface de révolution et la bague (51) du module de nettoyage (5) selon un deuxième axe de révolution (A2) de la bague (51).

4. Système d'assistance à la conduite (1) selon la revendication 3, **caractérisé en ce que** la surface de révolution et la bague (51) du module de nettoyage (5) sont de formes générales complémentaires.

5. Système d'assistance à la conduite (1) selon l'une quelconque des revendications 3 ou 4, **caractérisé en ce que** le premier axe de révolution (A1) du dispositif de protection (3) ou de l'élément optique et le deuxième axe de révolution (A2) de la bague (51) du module de nettoyage (5) sont confondus.

6. Système d'assistance à la conduite (1) selon l'une quelconque des revendications 3 à 5, **caractérisé en ce que** le dispositif de protection (3) ou l'élément optique sont configurés pour être monté fixe sur le véhicule automobile et la bague (51) est configurée pour être montée mobile par rapport au dispositif de protection (3) ou à l'élément optique.

7. Système d'assistance à la conduite (1) selon l'une quelconque des revendications 3 à 5, **caractérisé en ce que** la bague (51) est configurée pour être montée fixe sur le véhicule automobile et le dispositif de protection (3) est configuré pour être monté mobile par rapport à la bague (51).

8. Système d'assistance à la conduite (1) selon la revendication 7, **caractérisé en ce que** :
- ledit système d'assistance à la conduite (1) comprend au moins deux dispositifs de protection (3) distincts et au moins deux modules de nettoyage (5) respectivement associés à un des dispositifs de protection (3), lesdits dispositifs de protection (3) étant reliés entre eux par un capot (11) et **en ce que**
- l'au moins un actionneur est disposé de manière à pouvoir déplacer le capot (11) afin de piloter de façon synchronisée le déplacement des dispositifs de protection (3) en translation.

9. Système d'assistance à la conduite (1) selon l'une quelconque des revendications 3 à 8, **caractérisé en ce qu'**il comporte en outre une unité électronique de contrôle configurée pour déclencher un procédé de nettoyage (100) de l'élément optique ou du dispositif de protection (3) de l'élément optique, ledit procédé de nettoyage (100) comprenant :
- au moins une première étape de nettoyage (E1) lors d'un mouvement relatif entre la bague (51) et la surface de révolution selon le deuxième axe de révolution (A2) de la bague (51) dans un premier sens, et
- une deuxième étape de nettoyage (E2) lors d'un mouvement relatif entre la bague (51) et le la surface de révolution selon le deuxième axe de révolution (A2) de la bague (51) dans un deuxième sens opposé au premier sens.

10. Système d'assistance à la conduite (1) selon la revendication 9 en combinaison avec la revendication 1 ou 2, **caractérisé en ce que** l'unité électronique de contrôle est configurée pour piloter l'au moins une buse de projection de fluide (7) afin de mettre en oeuvre une étape de projection de fluide de nettoyage (E1') sur l'élément optique ou le dispositif de protection (3) lorsque des salissures sont détectées par l'élément optique.

## Patentansprüche

1. Modul (5) zur Reinigung eines optischen Elements oder einer Schutzvorrichtung (3) eines optischen Elements, das insbesondere zur Ausstattung eines Kraftfahrzeugs bestimmt ist, wobei das optische Element bzw. die Schutzvorrichtung (3) eine Rotationsfläche aufweist:
- wobei das Reinigungsmodul (5) mindestens einen Ring (51) umfasst, der vorzugsweise mindestens einen kreisbogenförmigen Abschnitt aufweist, der dazu ausgelegt ist, die Rotationsfläche des optischen Elements bzw. der Schutzvorrichtung (3) und mindestens eine Reinigungsstruktur (53) zu umgeben,
- wobei die Rotationsfläche eine zylindrische Form aufweist und der Ring (51) dazu ausgelegt ist, in einer relativen Translationsbewegung entlang einer Rotationsachse (A2) des Rings (51) in Bezug auf das optische Element bzw. die Schutzvorrichtung (3) beweglich zu sein, um die Reinigungsstruktur entlang der Rotationsfläche in Bewegung zu versetzen, wobei die Reinigungsstruktur mindestens eine Fluidsprühdüse (7) umfasst, die dazu ausgelegt ist, ein Reinigungsfluid auf die Rotationsfläche zu sprühen, **dadurch gekennzeichnet, dass** die Reinigungsstruktur eine Wischstruktur (53) aufweist, wobei die Wischstruktur (53) vorzugsweise einen O-Ring aufweist.

2. Reinigungsmodul (5) nach Anspruch 1, **dadurch gekennzeichnet, dass** der Ring (51) die mindestens eine Fluidsprühdüse (7) aufweist.

3. Fahrerassistenzsystem (1), insbesondere für ein Kraftfahrzeug, umfassend mindestens ein optisches Element, **dadurch gekennzeichnet, dass** es ferner Folgendes umfasst:
• mindestens eine Rotationsfläche um eine erste Rotationsachse (A1), wobei die Rotationsfläche zu einer Schutzvorrichtung (3) gehört und dazu ausgelegt ist, um das mindestens eine optische Element bzw. die zum optischen Element gehörende Rotationsfläche herum angeordnet zu sein,
• ein zugehöriges Reinigungsmodul (5) nach einem der Ansprüche 1 oder 2, das einen Ring (51) aufweist, und
• mindestens einen Aktuator, der dazu ausgelegt ist, eine relative Translationsbewegung zwischen der Rotationsfläche und dem Ring (51) des Reinigungsmoduls (5) entlang einer zweiten Rotationsachse (A2) des Rings (51) zu erzeugen.

4. Fahrerassistenzsystem (1) nach Anspruch 3, **dadurch gekennzeichnet, dass** die Rotationsfläche und der Ring (51) des Reinigungsmoduls (5) komplementäre allgemeine Formen aufweisen.

5. Fahrerassistenzsystem (1) nach einem der Ansprüche 3 oder 4, **dadurch gekennzeichnet, dass** die erste Rotationsachse (A1) der Schutzvorrichtung (3) bzw. des optischen Elements und die zweite Rotationsachse (A2) des Rings (51) des Reinigungsmoduls (5) zusammenfallen.

6. Fahrerassistenzsystem (1) nach einem der Ansprüche 3 bis 5, **dadurch gekennzeichnet, dass** die Schutzvorrichtung (3) bzw. das optische Element dazu ausgelegt sind, fest am Kraftfahrzeug angebracht zu sein, und der Ring (51) dazu ausgelegt ist, in Bezug auf die Schutzvorrichtung (3) bzw. das optische Element beweglich angebracht zu sein.

7. Fahrerassistenzsystem (1) nach einem der Ansprüche 3 bis 5, **dadurch gekennzeichnet, dass** der Ring (51) dazu ausgelegt ist, fest am Kraftfahrzeug angebracht zu sein, und die Schutzvorrichtung (3) dazu ausgelegt ist, in Bezug auf den Ring (51) beweglich angebracht zu sein.

8. Fahrerassistenzsystem (1) nach Anspruch 7, **dadurch gekennzeichnet, dass**:
- das Fahrerassistenzsystem (1) mindestens zwei separate Schutzvorrichtungen (3) und mindestens zwei Reinigungsmodule (5), die jeweils einer der Schutzvorrichtungen (3) zugeordnet sind, umfasst, wobei die Schutzvorrichtungen (3) durch eine Abdeckung (11) miteinander verbunden sind, und dadurch, dass
- der mindestens eine Aktuator so angeordnet ist, dass er die Abdeckung (11) bewegen kann, um die Translationsbewegung der Schutzvorrichtungen (3) synchron zu steuern.

9. Fahrerassistenzsystem (1) nach einem der Ansprüche 3 bis 8, **dadurch gekennzeichnet, dass** es ferner eine elektronische Steuereinheit umfasst, die dazu ausgelegt ist, ein Verfahren (100) zur Reinigung des optischen Elements bzw. der Schutzvorrichtung (3) des optischen Elements auszulösen, wobei das Reinigungsverfahren (100) Folgendes umfasst:
- mindestens einen ersten Reinigungsschritt (E1) bei einer Relativbewegung zwischen dem Ring (51) und der Rotationsfläche entlang der zweiten Rotationsachse (A2) des Rings (51) in einer ersten Richtung, und
- einen zweiten Reinigungsschritt (E2) bei einer Relativbewegung zwischen dem Ring (51) und der Rotationsfläche entlang der zweiten Rotationsachse (A2) des Rings (51) in einer der ersten Richtung entgegengesetzten zweiten Richtung.

10. Fahrerassistenzsystem (1) nach Anspruch 9 in Verbindung mit Anspruch 1 oder 2, **dadurch gekennzeichnet, dass** die elektronische Steuereinheit dazu ausgelegt ist, die mindestens eine Fluidsprühdüse (7) zu steuern, um einen Schritt des Sprühens von Reinigungsfluid (E1') auf das optische Element bzw. die Schutzvorrichtung (3) zu implementieren, wenn Verschmutzungen durch das optische Element detektiert werden.

## Claims

1. Module (5) for cleaning an optical element or an optical element protection device (3), intended in particular to equip a motor vehicle, said optical element or said protection device (3) having a surface of revolution:
- the cleaning module (5) including at least one ring (51), preferably having at least one circular arc shape part configured to surround the surface of revolution of the optical element or of the protection device (3) and at least one cleaning structure (53),
- the surface of revolution having a cylindrical shape and the ring (51) being configured to be mobile with a relative movement in translation along an axis of revolution (A2) of the ring (51) with respect to the optical element or to the protection device (3) so as to drive movement of the cleaning structure along the surface of revolution, the cleaning structure including at least one fluid spraying nozzle (7) configured to spray a cleaning fluid onto the surface of revolution, **characterized in that** the cleaning structure includes a wiping structure (53), the wiping structure (53) preferably including an O-ring.

2. Cleaning module (5) according to Claim 1, **characterized in that** the ring (51) includes said at least one fluid spraying nozzle (7).

3. Driving assistance system (1) in particular for motor vehicles, including at least one optical element, **characterized in that** it further includes:
• at least one surface of revolution about a first axis of revolution (A1), said surface of revolution being part of a protection device (3) and being configured to be arranged around said at least one optical element or said surface of revolution that is part of the optical element,
• an associated cleaning module (5) according to one of Claims 1 or 2, including a ring (51), and
• at least one actuator configured to generate relative movement in translation between the surface of revolution and the ring (51) of the cleaning module (5) along a second axis of revolution (A2) of the ring (51).

4. Driving assistance system (1) according to Claim 3, **characterized in that** the surface of revolution and the ring (51) of the cleaning module (5) have complementary general shapes.

5. Driving assistance system (1) according to either one of Claims 3 or 4, **characterized in that** the first axis of revolution (A1) of the protection device (3) or of the optical element and the second axis of revolution (A2) of the ring (51) of the cleaning module (5) coincide.

6. Driving assistance system (1) according to any one of Claims 3 to 5, **characterized in that** the protection device (3) or the optical element are configured to be fixedly mounted on the motor vehicle and the ring (51) is configured to be mounted mobile relative to the protection device (3) or to the optical element.

7. Driving assistance system (1) according to any one of Claims 3 to 5, **characterized in that** the ring (51) is configured to be fixedly mounted on the motor vehicle and the protection device (3) is configured to be mounted mobile relative to the ring (51).

8. Driving assistance system (1) according to Claim 7, **characterized in that**:
- said driving assistance system (1) includes at least two separate protection devices (3) and at least two cleaning modules (5) respectively associated with one of the protection devices (3), said protection devices (3) being interconnected by a cap (11), and **in that**
- the at least one actuator is disposed in such a manner as to be able to move the cap (11) in order to drive in a synchronized manner the movement in translation of the protection devices (3).

9. Driving assistance system (1) according to any one of Claims 3 to 8, **characterized in that** it further includes an electronic control unit configured to trigger a process (100) of cleaning the optical element or the optical element protection device (3), said cleaning process (100) including:
- at least one first cleaning step (E1) during relative movement between the ring (51) and the surface of revolution along the second axis of revolution (A2) of the ring (51) in a first direction, and
- a second cleaning step (E2) during relative movement between the ring (51) and the surface of revolution along the second axis of revolution (A2) of the ring (51) in a second direction opposite the first direction.

10. Driving assistance system (1) according to Claim 9 in combination with Claim 1 or 2, **characterized in that** the electronic control unit is configured to control the at least one fluid spraying nozzle (7) in order to execute a step (E1') of spraying cleaning fluid onto the optical element or the protection device (3) when dirt is detected by the optical element.
